# EUROPEAN PATENT APPLICATION

(11) **EP 4 269 493 A1**
(43) Date of publication of application: **01.11.2023**
(21) Application number: 21910578.0
(22) Date of filing: 16.12.2021
(51) Int. Cl.: C08K 5/54, C08K 7/06, C08K 7/14, C08L 101/00, H01M 50/202, H01M 50/204, H01M 50/227, H01M 50/233, H01M 50/383

(54) **RESIN MOLDED BODY, BATTERY PACK**

(30) Priority: 25.12.2020 JP 2020216366; 13.12.2021 JP 2021201864
(71) Applicant: Mitsubishi Materials Corporation, Tokyo 100-8117 (JP)
(72) Inventor: WAKAMATSU Mariko, Amagasaki-shi, Hyogo 660-0856 (JP); ISHIKAWA Fumiaki, Saitama-shi, Saitama 330-8508 (JP); ASHIDA Keiko, Amagasaki-shi, Hyogo 660-0856 (JP); ZUSHI Toshihiro, Amagasaki-shi, Hyogo 660-0856 (JP)
(74) Representative: Hoffmann Eitle
(86) International application number: PCT/JP2021/046473
(87) International publication number: WO 2022/138430

(57) **Abstract**

A resin molded body according to the present invention is a resin molded body to be provided on an outer periphery of one or more lithium-ion secondary battery cells including a safety valve or an exhaust hole such that at least the safety valve or the exhaust hole is covered, in which a thermal conductivity (measurement temperature: 50°C) of the resin molded body measured by a steady state comparative-longitudinal heat flow method based on JIS H7903:2008 is less than 1.0 W/m·K, a thickness of a part of the resin molded body, the part covering the safety valve or the exhaust hole, is 0.5 mm or more and 10.0 mm or less, and a hardness of a surface of the resin molded body measured by Type D durometer based on JIS K7215 is 50 or more and 90 or less.

## Description

### TECHNICAL FIELD

The present invention relates to a fire-resistant resin molded body and a battery pack using the same.

Priority is claimed on Japanese Patent Application Nos. 2020-216366 filed December 25, 2020 and 2021-201864 filed December 13, 2021, the contents of which are incorporated herein by reference.

### BACKGROUND ART

In recent years, the demand for lithium-ion secondary batteries (hereinafter, may be referred to as "batteries") is increasing. On the other hand, along with miniaturization and an increase in energy density (energy density is 300 Wh/kg or more), there is a risk that a temperature increases due to heat generation depending on how it is used. Therefore, the safety of batteries and battery packs has become more important.

For example, there is a risk that a lithium-ion secondary battery is overcharged or overdischarged or thermal runaway occurs in a case where unexpected shock is applied to cause internal short-circuit or external short-circuit. A lithium-ion secondary battery in which thermal runaway has occurred generates gas and increases an internal pressure of the battery. In a case where such a situation occurs, there is a possibility that an outer can bursts due to the increase in the internal pressure. Therefore, these batteries are provided with an exhaust hole, a safety valve, and the like for venting gas.

In addition, in a case where the thermal runaway occurs, there is a risk of ignition due to overheated batteries. In order to prevent spread of fire and burning, for example, in Patent Document 1, a surface of the battery is coated with a flameproof sheet.

However, a high-temperature and high-pressure gas blows out from the exhaust hole or the safety valve for venting gas provided in the lithium-ion secondary battery in which the thermal runaway has occurred. According to Non Patent Document 1, a maximum temperature thereof may exceed 999°C for an instant.

Accordingly, the flameproof sheet of Patent Document 1 is provided for an objective of preventing flames (that is, flameproofing) derived from this high-temperature gas.

### [Citation List]

### [Patent Documents]

[Patent Document 1]
Japanese Unexamined Patent Application, First Publication No. 2019-032923

### [Non Patent Document]

[Non Patent Document 1]
Hideki Matsumura, Kazuo Matsushima, Outline of Lectures in National Traffic Safety and Environment Laboratory Forum/Edited by National Traffic Safety and Environment Laboratory, 135-138, 2012

### SUMMARY OF INVENTION

### Technical Problem

However, due to a recent increase in energy density of a battery, a pressure of gas exhausted during thermal runaway has increased remarkably. Due to a high pressure of the gas, there is a risk of damage, even if the flameproof sheet of Patent Document 1 is used. Specifically, for example, in a case of a flameproof sheet formed of fibers disclosed in Patent Document 1, a mesh of the fibers spreads due to the high pressure of the gas. In addition, in a case of a flameproof sheet formed of a resin, the flameproof sheet melts due to a decrease to a strength that cannot withstand the high pressure in a softened state of the resin which is before the flameproof sheet reaches burning. Accordingly, in both cases, there is a risk that through-holes are formed in the flameproof sheet and high-temperature and high-pressure gas ejected from the through-holes spreads to and burn a member (e.g., an outer case accommodating a battery) other than the flameproof sheet.

In addition, air (oxygen) is supplied from the through-holes, and there is a risk that the fire spread and the burning of the battery itself expand, thereby causing thermal runaway of adjacent normal lithium-ion secondary batteries.

The present invention has been made in view of such a background, and an objective thereof is to provide a resin molded body that suppresses fire spread or burning, even if a high-temperature and high-pressure gas is ejected from a safety valve or an exhaust hole of a secondary battery due to thermal runaway of the lithium-ion secondary battery, and a battery pack including a lithium-ion secondary battery cell provided with this.

### Solution to Problem

In order to achieve the above objective, the present invention is configured as follows.

(1) A resin molded body according to the present invention is a resin molded body to be provided on an outer periphery of one or more lithium-ion secondary battery cells including a safety valve or an exhaust hole such that at least the safety valve or the exhaust hole is covered, in which a thermal conductivity (measurement temperature: 50°C) of the resin molded body measured by a steady state comparative-longitudinal heat flow method based on JIS H7903:2008 is less than 1.0 W/m·K, a thickness of a part of the resin molded body, the part covering the safety valve or the exhaust hole, is 0.5 mm or more and 10.0 mm or less, and a hardness of a surface of the resin molded body measured by Type D durometer based on JIS K7215 is 50 or more and 90 or less.
   According to the present invention, the resin molded body having the thermal conductivity, the thickness, and the surface hardness within the predetermined ranges is provided such that the safety valve or the exhaust hole of the lithium-ion secondary battery cell is covered. Accordingly, even if the lithium-ion secondary battery causes the thermal runaway, through-holes are not formed in the resin molded body due to the high-temperature and high-pressure gas ejected from the safety valve or the exhaust hole, and fire spread and burning due to the ejection of the high-temperature and high-pressure gas can be suppressed.
(2) In another embodiment of the resin molded body according to the present invention, the thickness of the resin molded body in the part covering the safety valve or the exhaust hole is 1.0 mm or more.
(3) In another embodiment of the resin molded body according to the present invention, the resin molded body contains a resin composition containing 2 parts by mass or more and 70 parts by mass or less of carbon fibers and 0.3 parts by mass or more and 7.0 parts by mass or less of a silane coupling agent with respect to 100 parts by mass of the thermoplastic resin.
(4) In another embodiment of the resin molded body according to the present invention, the resin composition further contains 50 parts by mass or less of polytetrafluoroethylene with respect to 100 parts by mass of the thermoplastic resin.
(5) In another embodiment of the resin molded body according to the present invention, the resin molded body contains 9 parts by mass or more and 80 parts by mass or less of glass fibers and 0.3 parts by mass or more and 7.0 parts by mass or less of a silane coupling agent with respect to 100 parts by mass of a thermoplastic resin.
(6) In another embodiment of the resin molded body according to the present invention, the resin composition further contains 2 parts by mass or more and 70 parts by mass or less of carbon fibers with respect to 100 parts by mass of the thermoplastic resin.
(7) In another embodiment of the resin molded body according to the present invention, the thermoplastic resin is any one or a mixture of two or more of polyphenylene sulfide, polyamide, polybutylene terephthalate, modified polyphenylene ether, and polycarbonate.
(8) A battery pack according to the present invention includes one or more lithium-ion secondary battery cells in which the resin molded body according to any one of (1) to (7) is provided on an outer periphery.
(9) A battery pack according to another embodiment of the present invention includes one or more lithium-ion secondary battery cells that includes a safety valve or an exhaust hole on one end surface, and a resin molded body that is disposed along the one end surface of the lithium-ion secondary battery cell and covers the safety valve or the exhaust hole, and the resin molded body is the resin molded body according to any one of (1) to (7).

### Advantageous Effects of Invention

As described above, according to the present invention, the resin molded body is provided such that the safety valve or the exhaust hole of the lithium-ion secondary battery cell is covered. Accordingly, even if the lithium-ion secondary battery causes the thermal runaway, through-holes are not formed in the resin molded body due to the high-temperature and high-pressure gas ejected from the safety valve or the exhaust hole, and fire spread and burning due to the ejection of the high-temperature and high-pressure gas can be suppressed.

### BRIEF DESCRIPTION OF DRAWINGS

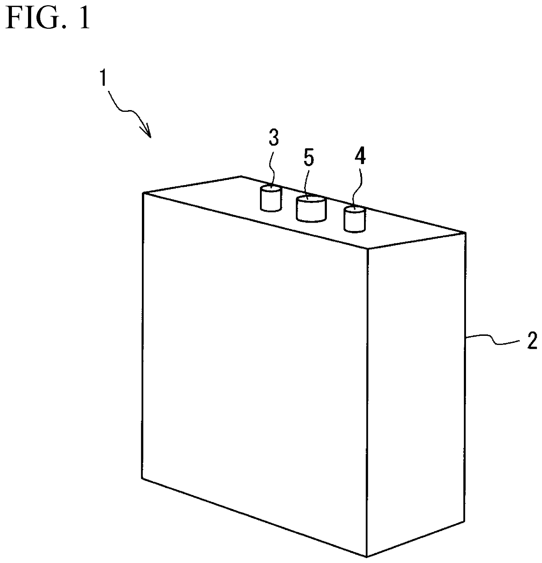

FIG. 1 is a perspective view of a lithium-ion secondary battery cell provided with a resin molded body according to one embodiment of the present invention.
FIG. 1 is a perspective view showing a resin molded body and a lithium-ion secondary battery cell according to one embodiment of the present invention.
FIG. 3 is a perspective view of a lithium-ion secondary battery cell provided with the resin molded body of FIG. 2.
FIG. 4 is a cross-sectional view taken along a line A-A of FIG. 3.
FIG. 5 is a perspective view corresponding to FIG. 3 of another embodiment of the present invention.
FIG. 6 is a perspective view corresponding to FIG. 3 of another embodiment of the present invention.
FIG. 7 is a cross-sectional view taken along a line B-B of FIG. 6.
FIG. 8 is a perspective view corresponding to FIG. 2 of another embodiment of the present invention.
FIG. 9 is a perspective view of a lithium-ion secondary battery cell provided with the resin molded body of FIG. 8.
FIG. 10 is a schematic configuration diagram of a battery pack according to one embodiment of the present invention.

### DESCRIPTION OF EMBODIMENTS

Hereinafter, embodiments of the present invention will be described in detail.

FIG. 1 is a perspective view of a lithium-ion secondary battery cell provided with a resin molded body according to one embodiment of the present invention.

A lithium-ion secondary battery cell 1 is, for example, a rectangular battery cell, in which a positive electrode terminal 3 and a negative electrode terminal 4 are provided on one end surface (an upper surface in FIG. 1) of an outer can 2 which is a battery container and a safety valve 5 is provided therebetween.

The safety valve 5 operates in a case where an internal pressure is increased due to thermal runaway of the lithium-ion secondary battery cell 1, and prevents the outer can 2 from bursting due to ejection of a high-temperature and high-pressure gas.

In a case where the thermal runaway of the lithium-ion secondary battery cell 1 occurs, there is a risk of ignition, and in a case where the high-temperature and high-pressure gas ejected from the safety valve 5 spreads widely instantaneously, it is difficult to prevent the spread of fire and burning.

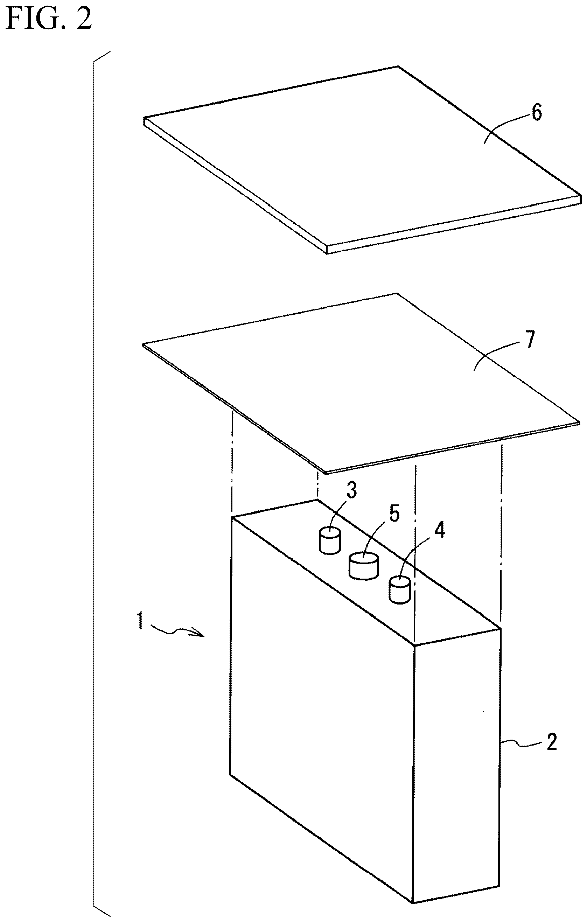

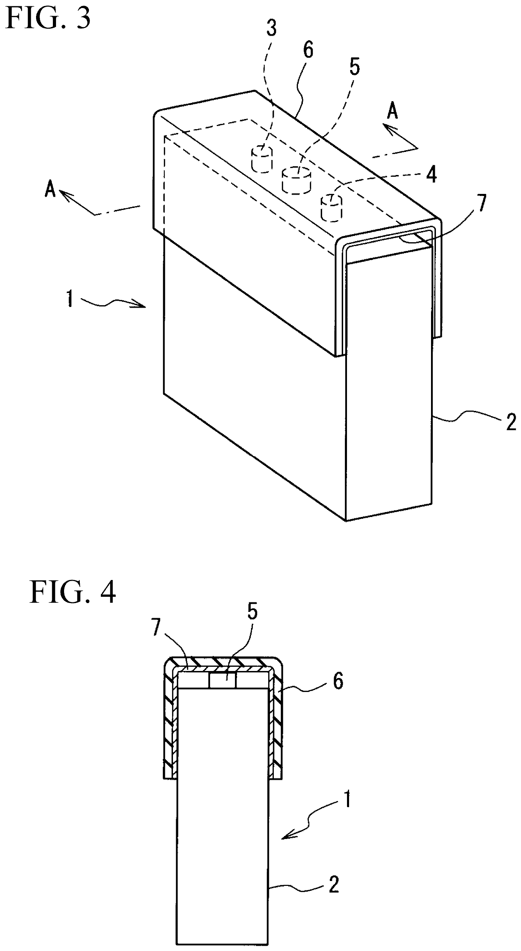

Therefore, in this embodiment, as shown in FIGS. 2, 3, and 4, which is a cross-sectional view taken along a line A-A of FIG. 3, a sheet-shaped resin molded body 6 having flexibility is provided on an outer periphery of the lithium-ion secondary battery cell 1 directly or with an insulating sheet 7 interposed (sandwiched) therebetween, such that at least the safety valve 5 is covered.

In a case where the insulating sheet 7 is provided, a portion of the insulating sheet 7 covering the safety valve 5 is preferably in contact with the safety valve 5, but may not be in contact. In a case where the insulating sheet 7 is not provided, a portion of the resin molded body 6 covering the safety valve 5 is preferably in contact with the safety valve 5, but may not be in contact.

In this embodiment, the insulating sheet 7 and the sheet-shaped resin molded body 6 are both rectangular with substantially the same size, and are provided such that an upper surface of the rectangular parallelepiped lithium-ion secondary battery cell 1 including the safety valve 5 is covered and upper portions of a front surface and a rear surface (right and left surfaces of FIG. 4) are covered. However, the sizes of the resin molded body 6 and the insulating sheet 7 may not be the same. The resin molded body 6 may be larger than the insulating sheet 7 or the insulating sheet 7 may be larger than the resin molded body 6. Both may be joined in advance.

A lead wire (not shown) connected to each of the positive electrode terminal 3 and the negative electrode terminal 4 of the lithium-ion secondary battery cell 1 is drawn out using a side surface not covered with the insulating sheet 7 and the resin molded body 6.

The lithium-ion secondary battery cell 1 provided with the insulating sheet 7 and the sheet-shaped resin molded body 6 is accommodated in an outer case (not shown). In the outer case, the resin molded body 6 covering the upper portions of the front surface and the rear surface of the lithium-ion secondary battery cell 1 is pressed by an inner wall face of the outer case, thereby holding the resin molded body 6.

The resin molded body 6 of this embodiment is obtained by molding and curing a resin composition which will be described later, and a thermal conductivity (measurement temperature: 50°C) of the resin molded body 6 is measured by a steady state comparative-longitudinal heat flow method (SCHF) based on JIS H7903:2008 is less than 1.0 W/m·K.

If the thermal conductivity is 1.0 W/m-K or more, in a case where the lithium-ion secondary battery causes the thermal runaway, there is a risk that the heat is conducted to a member on the outer periphery of the resin molded body 6 with the resin molded body 6 interposed therebetween, for example, the outer case accommodating the lithium-ion secondary battery cell 1 covered with the sheet-shaped resin molded body 6, by the high-temperature and high-pressure gas ejected from the safety valve or the exhaust hole, and the outer case is melted and deformed.

This thermal conductivity is preferably as low as possible, but a lower limit thereof is, for example, 0.1 W/m·K and more desirably 0.01 W/m·K.

In this embodiment, the resin molded body 6 is in the form of a sheet with a uniform thickness, and the thickness of the sheet-shaped resin molded body 6 may be 0.5 mm or more and 10.0 mm or less, preferably 0.7 mm or more and 5 mm or less, and more preferably 1.0 mm or more and 2 mm or less. It is desirable that the thickness of the resin molded body 6 is uniform, but the thickness of the portion of the resin molded body 6 that covers the safety valve 5 may be in the above range and the thickness of the other portion may not be in the above range.

In a case where the thickness thereof is less than 0.5 mm, through-holes are formed in the resin molded body 6 by the high-temperature and high-pressure gas ejected by the safety valve 5, the high-temperature and high-pressure gas is ejected from the through-holes, and there is a risk that the fire spreads to and burning occurs on a member outside the lithium-ion secondary battery cell 1 covered with the insulating sheet 7 and the sheet-shaped resin molded body 6. In addition, the through-holes serve as an air (oxygen) supply port, and there is a risk that the fire spread and the burning of the lithium-ion secondary battery cell 1 covered with the insulating sheet 7 and the sheet-shaped resin molded body 6 expand.

In a case where the thickness of the sheet-shaped resin molded body 6 exceeds 10.0 mm, the high-temperature and high-pressure gas can be blocked, that is, no through-holes are formed, but the resin molded body 6 is increased in size, and a molding process becomes complicated. In addition, it is difficult to accommodate the lithium-ion secondary battery cell 1 in the existing outer case.

A hardness of a surface of the resin molded body 6 is preferably 50 or more and 90 or less by Type D durometer based on JIS K7215. In a case where the hardness of the surface thereof is less than 50, there is a risk that the resin molded body 6 is damaged by the high-temperature and high-pressure gas (particularly, an effect of a pressure (ejection force)) ejected by the safety valve 5 and the through-holes are formed. In a case where the hardness of the surface thereof exceeds 90, the sheet-shaped resin molded body 6 becomes brittle. Therefore, in a case where the resin molded body 6 is provided in the lithium-ion secondary battery cell 1 by applying a curvature to the resin molded body 6, or in a case where an undesirable shock is applied to the resin molded body 6 from the high-temperature and high-pressure gas or the like ejected by the safety valve 5, the resin molded body 6 is damaged.

The resin molded body 6 is not limited to the resin composition which will be described later, and another resin composition may be molded and cured, as long as it is a resin to be the resin molded body according to the present invention after curing. In addition, the resin molded body 6 is suitable, because it does not melt down or form the through-holes due to the heat of the high-temperature and high-pressure gas, unlike other resin molded bodies other than the resin molded body according to the present invention.

A shape of the resin molded body 6 is not particularly limited, and may be any shape such as rectangular or circular, as long as it can cover at least a surface (the upper surface) on which the safety valve 5 and the exhaust hole are provided.

The resin molded body 6 of this embodiment contains a resin composition in which carbon fibers and a silane coupling agent are mixed with respect to a thermoplastic resin. This resin composition contains, in terms of percentage, 2 parts by mass or more and 70 parts by mass or less of carbon fibers and 0.3 parts by mass or more and 7.0 parts by mass or less of a silane coupling agent with respect to 100 parts by mass of the thermoplastic resin. In addition, the resin composition may further contain polytetrafluoroethylene (PTFE) in a range of 3 parts by mass or more and 50 parts by mass or less with respect to 100 parts by mass of the thermoplastic resin. Also, by containing PTFE, chemical resistance, an antifouling property, a sliding property, and the like of the resin composition can be improved.

In addition, the resin molded body 6 of another embodiment contains a resin composition in which glass fibers and a silane coupling agent are mixed with respect to a thermoplastic resin. This resin composition contains, in terms of percentage, 9 parts by mass or more and 80 parts by mass or less of glass fibers and 0.3 parts by mass or more and 7.0 parts by mass or less of a silane coupling agent with respect to 100 parts by mass of the thermoplastic resin. In addition, this resin composition may further contain carbon fibers in a range of 2 parts by mass or more and 70 parts by mass or less with respect to 100 parts by mass of the thermoplastic resin.

As the thermoplastic resin, any one or a mixture of two or more of polyphenylene sulfide (PPS), polyamide, polybutylene terephthalate, modified polyphenylene ether, and polycarbonate are exemplary examples.

As PPS which is a thermoplastic resin suitable for the resin composition, both oxidative cross-linked PPS subjected to heat treatment under the presence of oxygen to increase a melt viscosity and linear PPS which has increased a molecular weight while remaining in a chain by adding lithium chloride, an organic acid salt, water, and the like to a polymerization series can be used.

As the carbon fibers suitable for the resin composition, both polyacrylonitrile (PAN)-based carbon fibers using acrylic fibers and pitch-based carbon fibers using pitch can be used. In the present embodiment, the pitch-based carbon fibers can also be used as the carbon fibers.

The pitch-based carbon fibers include isotropic pitch-based carbon fibers and mesophase pitch-based carbon fibers, and either pitch-based carbon fibers can be used.

As examples of a shape of the carbon fibers used in the resin composition, a fiber diameter of a single fiber may be 1 to 20 µm, an average fiber length may be 0.01 to 10 mm, and an aspect ratio may be approximately 1.5 to 1300.

The silane coupling agent contained in the resin composition is a component which imparts deformation resistance and can suppress melting and dropping of the resin composition at the time of combustion and further improve flame retardancy.

As the silane coupling agent contained in the resin composition, 3-aminopropyltriethoxysilane and 3-glycidoxypropyltriethoxysilane are preferable exemplary examples.

The PTFE contained in the resin composition is preferably in the form of a powder. For example, a PTFE powder having an average particle diameter of 10 to 30 µm and a specific surface area determined by a BET method of 0.5 to 5 m²/g can be used.

The resin composition preferably further contains carbon black as a coloring agent, polyolefin wax, stearyl alcohol, or the like as a release agent, and hydrotalcite, zinc carbonate, or the like as a metal die corrosion inhibitor.

A well-known manufacturing method may be applied to manufacture the resin molded body 6.

For example, the PPS, the carbon fibers, the silane coupling agent, the PTFE, the carbon black, the polyolefin wax, the metal die corrosion inhibitor, and the release agent are put into a twin screw extruder, granulation is performed by controlling a kneading process temperature to 270°C or higher and 300°C or lower, controlling a screw rotation speed to 100 rpm or more and 300 rpm or less, and controlling a kneading process time to 30 minutes or more and 60 minutes or less, thereby forming a resin composition in the form of pellets.

Then, the obtained resin composition is molded to have a sheet shape with a desired thickness by a well-known molding method of extruding and molding by an extruder or press-molding by a press machine, thereby manufacturing the resin molded body 6.

As described above, in the present invention, the resin molded body 6 is provided such that the safety valve 5 of the lithium-ion secondary battery cell 1 is covered. Accordingly, even if the lithium-ion secondary battery causes the thermal runaway, through-holes are not formed in the resin molded body 6 due to the high-temperature and high-pressure gas ejected from the safety valve 5, and fire spread and burning due to the ejection of the high-temperature and high-pressure gas can be suppressed.

In the embodiment described above, the insulating sheet 7 and the resin molded body 6 provided such that the upper surface of the lithium-ion secondary battery cell 1 is covered and the upper portions of the front surface and the rear surface are covered are accommodated in the outer case as described above. Therefore, the resin molded body 6 covering the front surface and the rear surface of the lithium-ion secondary battery cell 1 is pressed against the inner wall face of the outer case, thereby holding the resin molded body 6.

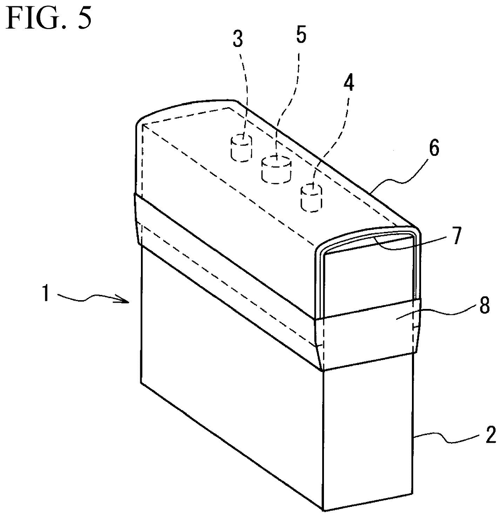

In contrast, in another embodiment of the present invention, as shown in FIG. 5 corresponding to FIG. 3, the resin molded body 6 may be fixed to the outer can 2 of the lithium-ion secondary battery cell 1 by an adhesive tape 8. In FIG. 5, the resin molded body 6 is fixed to the lithium-ion secondary battery cell 1 by winding and adhering the adhesive tape 8 to straddle each end portion of a front surface side and a rear surface side of the sheet-shaped resin molded body 6 covering the lithium-ion secondary battery cell 1 and the outer can 2 of the lithium-ion secondary battery cell 1.

Therefore, it is possible to suppress a shift of positions of the insulating sheet 7 and the resin molded body 6 that cover the lithium-ion secondary battery cell 1

In addition, when providing the insulating sheet 7 and the resin molded body 6 in the lithium-ion secondary battery cell 1, these can be fixed by the adhesive tape 8 while applying a tension so that a gap between the upper surface of the lithium-ion secondary battery cell 1 and the insulating sheet 7 becomes small.

Accordingly, the insulating sheet 7 and the resin molded body 6 can be brought into close contact with the safety valve 5 on the upper surface of the lithium-ion secondary battery cell 1, and it is possible to effectively suppress instantaneous spread of the high-temperature and high-pressure gas ejected from the safety valve 5 due to the thermal runaway caused by the lithium-ion secondary battery.

As the adhesive tape 8, an adhesive tape obtained by applying an acryl-based adhesive, a silicone-based adhesive, or the like onto a polyimide film can be applied, and among them, an adhesive tape obtained by applying a silicone-based adhesive to a polyimide film is suitable because it has excellent heat resistance.

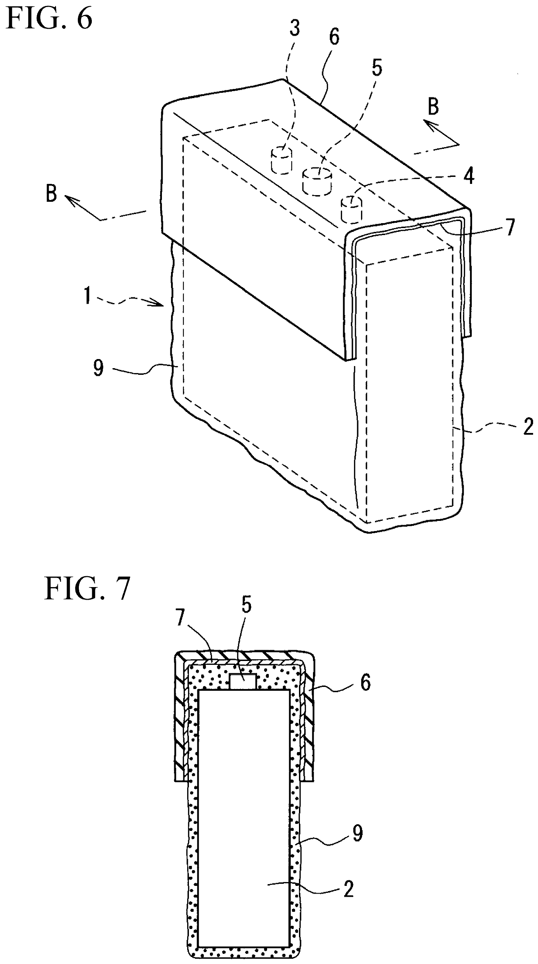

FIG. 6 is a perspective view corresponding to FIG. 3 of another embodiment of the present invention and FIG. 7 is a cross-sectional view taken along a line B-B of FIG. 6.

In this embodiment, the entire surface of an outer peripheral surface of the lithium-ion secondary battery cell 1 is coated with a putty-like composition 9 having excellent thermal conductivity.

The insulating sheet 7 and the sheet-shaped resin molded body 6 are provided such that the upper surface of the lithium-ion secondary battery cell 1, the upper portion of the front surface, and the upper portion of the rear surface are covered with the putty-like composition 9 interposed therebetween.

By coating the outer peripheral surface of the lithium-ion secondary battery cell 1 with the putty-like composition 9 having excellent thermal conductivity as described above, even if the lithium-ion secondary battery cell 1 generates heat due to the thermal runaway, it is possible to efficiently conduct the heat to the outside of the lithium-ion secondary battery cell 1 and make an overall heat distribution uniform.

The putty-like composition 9 can be coated on the lithium-ion secondary battery cell 1, which is a member to be coated, so as to follow a surface shape thereof. Accordingly, it is possible to obtain a large contact area with the lithium-ion secondary battery cell 1 which is a heat source, and significantly improve heat radiation.

A thickness of the putty-like composition 9 for coating is preferably 2 mm or more and 5 mm or less.

In each embodiment described above, the resin molded body of the present invention is applied to one lithium-ion secondary battery cell 1, but the resin molded body of the present invention can be applied to a plurality of lithium-ion secondary battery cells 1.

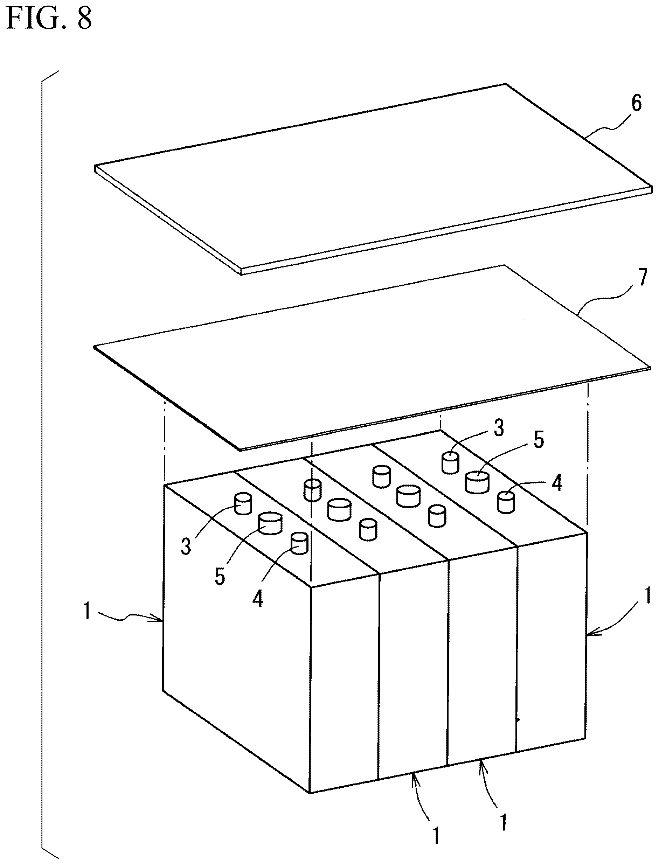

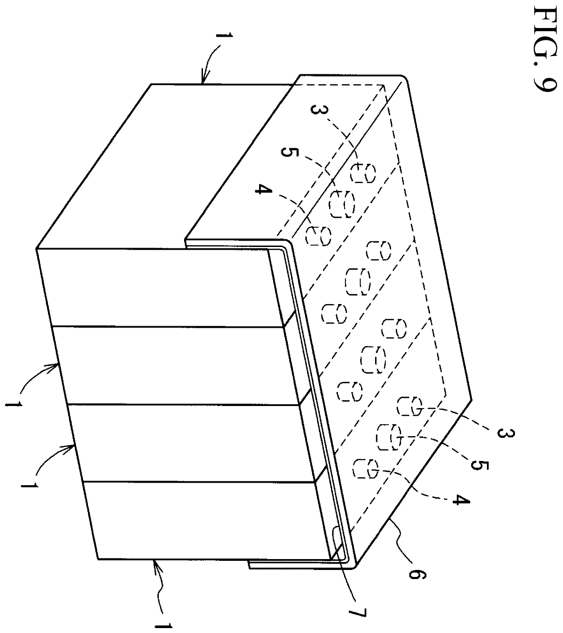

For example, as shown in FIGS. 8 and 9 corresponding to FIGS. 2 and 3, in an assembled battery in which a plurality of, in this example, four lithium-ion secondary battery cells 1 are connected via a bus bar (not shown), the insulating sheet 7 and the sheet-shaped resin molded body 6 may be provided such that each upper surface of each lithium-ion secondary battery cell 1 is covered and an upper portion of a front surface and an upper portion of a rear surface of each of the lithium-ion secondary battery cells 1 positioned at both ends are covered.

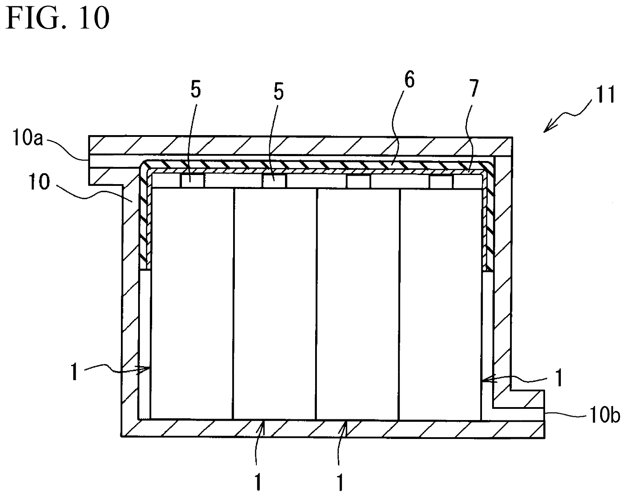

The four lithium-ion secondary battery cells 1 in which the insulating sheet 7 and the resin molded body 6 are provided are accommodated in a resin-made outer case 10 including a gas inlet 10a and a gas outlet 10b, for example, as shown in FIG. 10, thereby configuring a battery pack 11.

### (Other embodiments)

In the embodiment described above, the resin molded body is configured such that the upper surface of the lithium-ion secondary battery cell is covered and the upper portions of the front surface and the rear surface are covered, but the resin molded body may be configured such that approximately the entire surface except for a lead wire portion of the lithium-ion secondary battery cell is covered. In this case, the outer case may be omitted.

In each embodiment, the resin molded body has a sheet shape, but is not limited to a sheet shape. Any shape may be used as long as it is a shape capable of covering at least the safety valve of the lithium-ion secondary battery cell, a tape shape may be used, or the resin molded body may be molded in a cap shape (a bag shape or a cup shape) capable of being put on the upper portion of the lithium-ion secondary battery cell.

The resin molded body 6 having the cap shape may cover the entire part of the lithium-ion secondary battery cell, or may cover only a part of an upper end where the safety valve or the exhaust hole is disposed. In a case where the cap-shaped resin molded body 6 covers only a part of the upper end of the lithium-ion secondary battery cell, a length from the upper end (the upper surface) of the portion covering a side surface of the lithium-ion secondary battery cell is 2 mm or more and 300 mm or less, preferably 10 mm or more and 250 mm or less, and more preferably approximately 15 mm or more and 150 mm or less. If resin molded body 6 having such a shape is provided, it is possible to bring it into close contact with the lithium-ion secondary battery cell and easily perform attachment.

In a case where the resin molded body has the tape shape, the tape-shaped resin molded body is wound around the lithium-ion secondary battery cell such that the safety valve is covered, and an end portion of the tape-shaped resin molded body may be adhered and fixed with the adhesive tape.

In addition, the tape-shaped resin molded body is spirally wound such that substantially the entire surface of the outer peripheral surface of the lithium-ion secondary battery cell is covered, for example, half a pitch, and the end portion may be fixed with the adhesive tape.

An adhesive layer may be formed on at least a portion of one surface of the resin molded body, for example, on a peripheral portion of one surface, and the resin molded body may be adhered and fixed to the lithium-ion secondary battery cell.

In each embodiment, the resin molded body may be provided on an outer periphery of the lithium-ion secondary battery cell with the insulating sheet interposed therebetween, but, in another embodiment of the present invention, the insulating sheet may be omitted.

The embodiments described above may be suitably combined. For example, the sheet-shaped resin molded body 6 covering the lithium-ion secondary battery cell 1 with the putty-like composition 9 of FIG. 6 interposed therebetween may be adhered and fixed to the putty-like composition 9 by the adhesive tape 8 shown in FIG. 5.

In addition, at least a part of the outer peripheral surface of the plurality of lithium-ion secondary battery cells 1 shown in FIGS. 8 to 10 may be coated with the putty-like composition 9 shown in FIGS. 6 and 7. In this case, the putty-like composition 9 may or may not be coated between adjacent two lithium-ion secondary battery cells 1 and 1.

In each embodiment, the resin molded body is provided such that the safety valve of the lithium-ion secondary battery cell is covered, but the resin molded body may be provided such that the exhaust hole is covered, instead of the safety valve. In a case where the lithium-ion secondary battery cell includes both the safety valve and the exhaust hole, the resin molded body may be provided such that both the safety valve and the exhaust hole are covered.

In each embodiment, it is described that the resin molded body is applied to the rectangular lithium-ion secondary battery cell, but in the present invention, the resin molded body can also be applied to a cylindrical lithium-ion secondary battery cell in the same manner. In addition, the resin molded body of each embodiment is suitable for a lithium-ion secondary battery cell having a high energy density, and specifically, is suitable for a lithium-ion secondary battery cell having an energy density of 300 Wh/kg or more and preferably 400 Wh/kg or more.

### EXAMPLES

Hereinafter, a resin molded bodies were manufactured as examples, and a hardness (a surface hardness) and a thermal conductivity were measured as physical properties thereof.
1. Raw materials used to manufacture the resin composition
   (1) Polyphenylene sulfide (PPS-1):
      Torelina (registered trademark) M2588 (manufactured by Toray Industries, Inc.)
   (2) Polyphenylene sulfide (PPS-2):
      SE-730 (manufactured by DIC Corporation)
   (3) Polyphenylene sulfide (PPS-3):
      Torelina (registered trademark) L2840 (manufactured by Toray Industries, Inc.)
   (4) Polybutylene terephthalate (PBT-1):
      5710N1TX (manufactured by Mitsubishi Engineering-Plastics Corporation)
   (5) Polybutylene terephthalate (PBT-2):
      1494X02 (manufactured by Toray Industries, Inc.)
   (6) Polyamide 6 (PA6):
      CM1014 V0 (manufactured by Toray Industries, Inc.)
   (7) Modified polyphenylene ether (mPPE-1):
      240Z (manufactured by Asahi Kasei Corporation)
   (8) Modified polyphenylene ether (mPPE-2):
      644Z (manufactured by Asahi Kasei Corporation)
   (9) Modified polyphenylene ether (mPPE-3):
      GN30 (manufactured by Mitsubishi Engineering-Plastics Corporation)
   (10) Polycarbonate (PC-1):
      GV-3430R/QG0717VX (manufactured by Teijin Limited)
   (11) Polycarbonate (PC-2):
      MN4800Z/QM19047Z (manufactured by Teijin Limited)
   (12) Carbon fibers:
      DONACARBO Milled (registered trademark) S-242 (manufactured by Osaka Gas Chemicals Co., Ltd.), pitch-based carbon fibers, average fiber length of 0.36 mm, fiber diameter of 13 µm, aspect ratio of 28
   (13) Glass fibers
      Chopped strand CS-3J-256 (manufactured by Nitto Boseki Co., Ltd.), cut length of 3 mm, fiber diameter of 11 µm, silane-based treated, heteromorphic ratio of 1:1, cross-sectional shape: round
   (14) Polytetrafluoroethylene (PTFE):
      Fluon (registered trademark) L169E (manufactured by AGC Inc.), powdery, average particle diameter of 18 µm, BET specific surface area of 2 m²/g
   (15) Silane coupling agent (deformation resistance imparting agent):
      KBE-903 (manufactured by Shin-Etsu Chemical Co., Ltd.), flash point of 98°C, minimum coating area of 352 m²/g
   (16) Carbon black (coloring agent):
      BP880 (manufactured by Cabot Corporation)
   (17) Polyolefin wax (release agent):
      LICOWAX PE520 (manufactured by Clariant Chemicals Co., Ltd.), dropping point of 117°C to 123°C, melt viscosity of 650 mPa s (140°C)
   (18) Zinc carbonate (metal die corrosion inhibitor):
      Sedoaen (trade name), ZnCO₃ (manufactured by Seido Chemical Industry Co., Ltd.)

### 2. Preparation of resin composition, granulation

Each resin composition of Present Invention Examples 1 to 13, in which the type of the thermoplastic resin and mixed amounts of the PTFE, the carbon fibers, the glass fibers, the silane coupling agent, the release agent, the coloring agent, and the metal die corrosion inhibitor with respect to 100 mass ratio (parts by mass) of thermoplastic resin were changed, was formed. Table 1 shows a composition of each resin composition of Present Invention Examples 1 to 13. Each component shown in Table 1 was weighed, dry-blended, and then granulated by using a twin screw extruder to granulate each resin composition of Present Invention Examples 1 to 13.

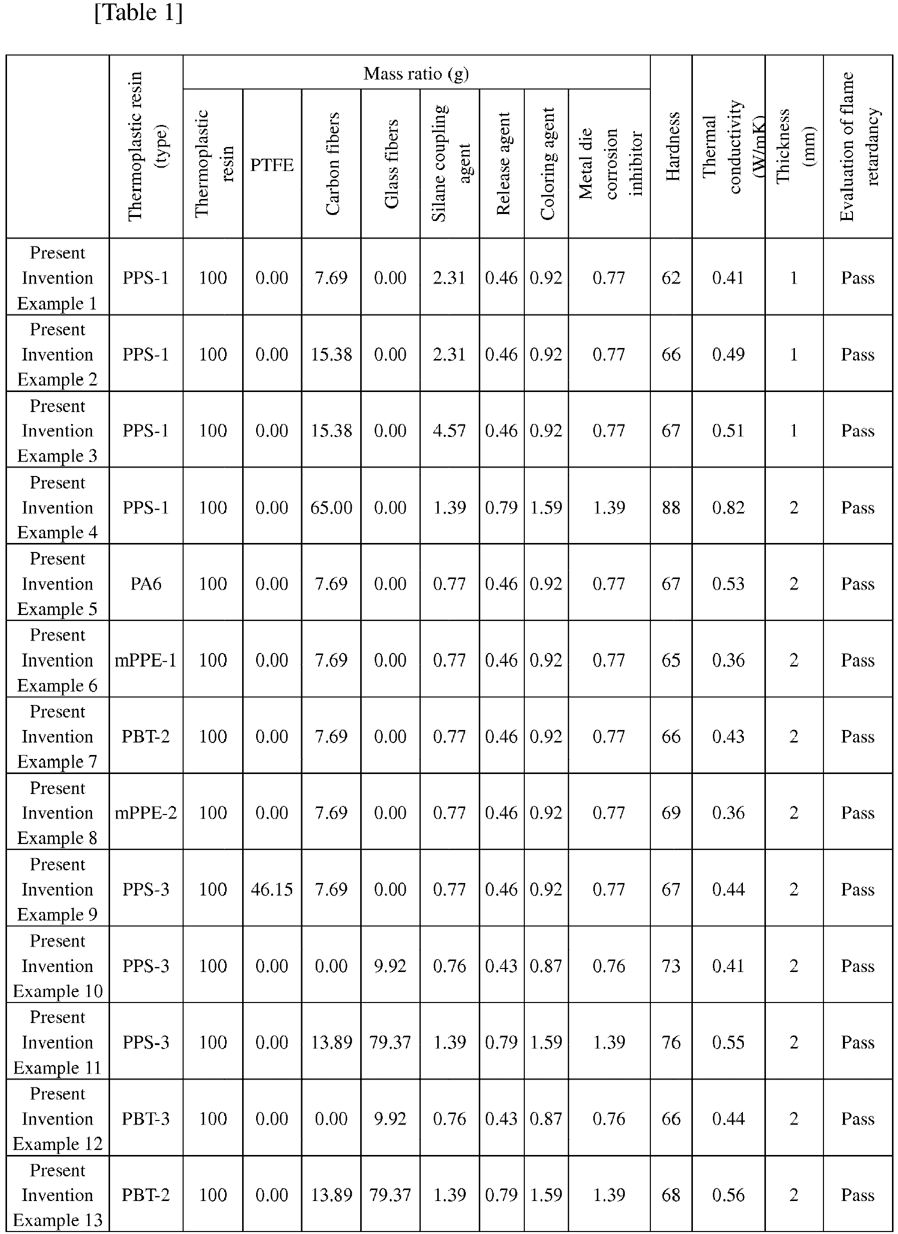

### 3. Molding of resin molded body

The injection molding was performed by using the resin composition (granules) of Present Invention Examples 1 to 13, and a sheet-shaped resin molded body having a thickness shown in Table 1 was manufactured.

Molding condition:
Cylinder temperature of 270°C to 310°C
Injection head temperature of 320°C
Metal die temperature of 140°C

### 4. Measurement of hardness and thermal conductivity

A hardness and a thermal conductivity were measured using the obtained resin molded body of each of Present Invention Examples 1 to 13.
(1) Measurement of hardness:
   The hardness was measured based on JIS K7215.
(2) Measurement of thermal conductivity:
   The thermal conductivity at a measurement temperature of 50°C was measured by the steady state comparative-longitudinal heat flow method based on JIS H7903:2008.
(3) Evaluation of flame retardancy:
   The flame retardancy of the resin molded body of each of Present Invention Examples 1 to 13 was evaluated by an evaluation test of the flame retardancy that simulated the ejection of the high-temperature and high-pressure gas from the safety valve or the exhaust hole of the lithium-ion secondary battery caused by the thermal runaway of the lithium-ion secondary battery. In a test method, a 5580 W burner was fixed vertically downward, a resin sheet having a size of 100 mm × 120 mm × 2 mmt was prepared, and the resin sheet was disposed at a position of 200 mm from a tip nozzle of the burner to be parallel to the flow.

The burner was ignited, and in a case where the resin sheet was burned before the resin sheet is deformed in a vertical direction by 5 mm or more, the flame retardancy was evaluated as "fail", and in a case where the resin sheet was not burned even after it is deformed by 5 mm and a deformation amount is measurable, the flame retardancy was evaluated as "pass".

Table 1 shows results of the measurement.

According to the results shown in Present Invention Examples 1 to 4 of Table 1, in a case where a resin composition containing, in terms of percentage, 7.69 parts by mass or more and 65.00 parts by mass or less of the carbon fibers and 1.39 parts by mass or more and 4.57 parts by mass or less of the silane coupling agent, with respect to 100 parts by mass of the polyphenylene sulfide (the thermoplastic resin) is used, a resin molded body having excellent strength properties with the hardness of 62 to 88 and the thermal conductivity of 0.41 to 0.82 (W/mK) and a low thermal conductivity can be obtained.

In addition, according to the results shown in Present Invention Examples 5 to 8 of Table 1, in a case where a resin composition, in which the polyphenylene sulfide of Present Invention Example 1 was changed to polyamide 6, modified polyphenylene ether, and polybutylene terephthalate, and the amount of the silane coupling agent was changed to 0.77 parts by mass with respect to 100 parts by mass of each of the changed polyamide 6, modified polyphenylene ether, and polybutylene terephthalate, is used, a resin molded body having excellent strength properties with the hardness of 65 to 69 and the thermal conductivity of 0.36 to 0.53 (W/mK) and a low thermal conductivity can be obtained.

Further, according to the results shown in Present Invention Example 9 of Table 1, a resin composition containing, in terms of percentage, 46.15 parts by mass of the PTFE, 7.69 parts by mass of the carbon fibers, and 0.77 parts by mass of the silane coupling agent with respect to 100 parts by mass of the polyphenylene sulfide, is used, a resin molded body having excellent strength properties with the hardness of 67 and the thermal conductivity of 0.44 (W/mK) and a low thermal conductivity can be obtained.

In addition, according to the results shown in Present Invention Examples 10 to 13 of Table 1, in a case where a resin composition containing, in terms of percentage, 0 parts by mass or more and 13.89 parts by mass of the carbon fibers, 9.92 parts by mass or more and 79.37 parts by mass or less of the glass fibers, and 0.76 parts by mass or more and 1.39 parts by mass or less of the silane coupling agent with respect to 100 parts by mass of the thermoplastic resin, is used, a resin molded body having excellent strength properties with the hardness of 66 to 76 and the thermal conductivity of 0.41 to 0.56 (W/mK) and a low thermal conductivity can be obtained.

Further, each of the resin molded bodies of Present Invention Examples 1 to 13 was evaluated as pass in the flame retardancy evaluation test. Therefore, in a case where each resin molded body is provided on an outer periphery of one or more lithium-ion secondary battery cells including the safety valve or the exhaust hole such that at least the safety valve or the exhaust hole is covered, sufficient flame retardancy is obtained.

In each of Present Invention Examples 10 to 13 of examples described above, the metal die corrosion inhibitor, the release agent, and the coloring agent are contained, but in the resin composition configuring the resin molded body of the present invention, the metal die corrosion inhibitor, the release agent, and the coloring agent are not essential components. A resin molded body having excellent strength properties and a low thermal conductivity can be obtained even without containing the metal die corrosion inhibitor, the release agent, and the coloring agent.

In addition, the contents of the metal die corrosion inhibitor, the release agent, and the coloring agent of Present Invention Examples 10 to 13 of the examples described above are merely an example. Accordingly, the contents of the metal die corrosion inhibitor, the release agent, and the coloring agent can be increased or decreased to any amounts, as needed, and the content is not limited.

The evaluation test of the flame retardancy that simulated the ejection of the high-temperature and high-pressure gas from the safety valve or the exhaust hole of the lithium-ion secondary battery caused by the thermal runaway of the lithium-ion secondary battery was also performed on each resin molded body of Present Invention Examples 20 to 28 shown in Table 2.

**[Table 2]**

| | Thermoplastic resin (type) | Hardness | Thermal conductivity (W/mK) | Thickness (mm) | Evaluation of flame retardancy |
|---|---|---|---|---|---|
| Present Invention Example 20 | PA6 | 68 | 0.48 | 2 | Pass |
| Present Invention Example 21 | mPPE-1 | 65 | 0.33 | 2 | Pass |
| Present Invention Example 22 | PC-2 | 68 | 0.47 | 2 | Pass |
| Present Invention Example 23 | PPS-2 | 74 | 0.46 | 2 | Pass |
| Present Invention Example 24 | PBT 1 | 68 | 0.42 | 2 | Pass |
| Present Invention Example 25 | mPPE-3 | 71 | 0.40 | 2 | Pass |
| Present Invention Example 26 | PC-1 | 70 | 0.45 | 2 | Pass |
| Present Invention Example 27 | PBT-2 | 61 | 0.40 | 2 | Pass |
| Present Invention Example 28 | mPPE-2 | 69 | 0.35 | 2 | Pass |

For each resin molded body of Present Invention Examples 20 to 28, a thermal conductivity (measurement temperature: 50°C) measured by the steady state comparative-longitudinal heat flow method based on JIS H7903:2008 is less than 1.0 W/m·K, a thickness is 0.5 mm or more and 10.0 mm or less, and a hardness of a surface measured by Type D durometer based on JIS K7215 is 50 or more and 90 or less. Therefore, the results of the flame retardancy evaluation were pass in the same manner as in Present Invention Examples 1 to 13 described above.

### [Reference Signs List]

1: Lithium-ion secondary battery cell
2: Outer can
3: Positive electrode terminal
4: Negative electrode terminal
5: Safety valve
6: Resin molded body
7: Insulating sheet
8: Adhesive tape
9: Putty-like composition
10: Outer case
11: Battery pack

## Claims

1. A resin molded body to be provided on an outer periphery of one or more lithium-ion secondary battery cells including a safety valve or an exhaust hole such that at least the safety valve or the exhaust hole is covered,
wherein a thermal conductivity (measurement temperature: 50°C) of the resin molded body measured by a steady state comparative-longitudinal heat flow method based on JIS H7903:2008 is less than 1.0 W/m·K,
a thickness of a part of the resin molded body, the part covering the safety valve or the exhaust hole, is 0.5 mm or more and 10.0 mm or less, and
a hardness of a surface of the resin molded body measured by Type D durometer based on JIS K7215 is 50 or more and 90 or less.

2. The resin molded body according to Claim 1,
wherein the thickness of the resin molded body in the part covering the safety valve or the exhaust hole is 1.0 mm or more.

3. The resin molded body according to Claim 1 or 2,
wherein the resin molded body contains a resin composition containing 2 parts by mass or more and 70 parts by mass or less of carbon fibers and 0.3 parts by mass or more and 7.0 parts by mass or less of a silane coupling agent with respect to 100 parts by mass of a thermoplastic resin.

4. The resin molded body according to Claim 3,
wherein the resin composition further contains 50 parts by mass or less of polytetrafluoroethylene with respect to 100 parts by mass of the thermoplastic resin.

5. The resin molded body according to Claim 1 or 2,
wherein the resin molded body contains a resin composition containing 9 parts by mass or more and 80 parts by mass or less of glass fibers and 0.3 parts by mass or more and 7.0 parts by mass or less of a silane coupling agent with respect to 100 parts by mass of a thermoplastic resin.

6. The resin molded body according to Claim 5,
wherein the resin composition further contains 2 parts by mass or more and 70 parts by mass or less of carbon fibers with respect to 100 parts by mass of the thermoplastic resin.

7. The resin molded body according to any one of Claims 3 to 6,
wherein the thermoplastic resin is any one or a mixture of two or more of polyphenylene sulfide, polyamide, polybutylene terephthalate, modified polyphenylene ether, and polycarbonate.

8. A battery pack comprising:
one or more lithium-ion secondary battery cells in which the resin molded body according to any one of Claims 1 to 7 is provided on an outer periphery.

9. A battery pack comprising:
one or more lithium-ion secondary battery cells that includes a safety valve or an exhaust hole on one end surface; and
a resin molded body that is disposed along the one end surface of the lithium-ion secondary battery cell and covers the safety valve or the exhaust hole,
wherein the resin molded body is the resin molded body according to any one of Claims 1 to 7.
